# EUROPEAN PATENT SPECIFICATION

(11) **EP 2 635 506 B1**
(45) Date of publication and mention of the grant of the patent: **17.05.2017**
(21) Application number: 11838294.4
(22) Date of filing: 04.11.2011
(51) Int. Cl.: B65D 88/12, B65D 90/58, B65D 90/62, B65D 90/66

(54) **DRILLING MUD CONTAINER WITH A SLIDING LID**
BOHRSCHLAMMCONTAINER MIT EINEM GLEITDECKEL
CONTENEUR À BOUE DE FORAGE AVEC UN COUVERCLE COULISSANT

(30) Priority: 06.11.2010 NO 20101563
(43) Date of publication of application: 11.09.2013
(73) Proprietor: Hoover Container Solutions Norway AS, 4056 TANANGER (NO)
(72) Inventor: SEKSE, Jan, 4050 Sola (NO)
(74) Representative: Håmsø Patentbyrå ANS
(86) International application number: PCT/NO2011/000312
(87) International publication number: WO 2012/060717

(56) References cited:
- GB-A- 1 433 859
- JP-A- 9 086 591
- US-A- 2 989 008
- US-A1- 2003 192 900
- US-A1- 2007 210 079

## Description

A drilling-mud container including bulkheads of plates provided with vertical and horizontal profiles forming a frame is described, the drilling-mud container being provided with at least one sliding lid which is arranged to be displaced in a sliding track by means of at least one opening mechanism,, the displacement being possible in both an open and closed position of a hinged service hatch arranged for filling and maintenance access to the container.

In what follows, conditions relating to filling and emptying a container holding a mass, typically drilling mud, in connection with oil and gas exploration drilling are described.

In oil drilling and equivalents thereto, liquids, typically drilling mud, completion fluid (brine), and slop fluid (mixture of drilling/completion fluid and water) are used, and it is important that they are handled properly and safely upon return to the surface.

Contaminated liquids are carried from the drilling device to a remote facility for further processing to properly clean the liquids and handle the separated waste.

For this, it is necessary to use waste containers, which have to be tight so as not to get any emissions of said contaminated liquid during the transport to the processing facility for further treatment.

In offshore drilling operations, contaminated drilling mud in waste containers is carried by supply ships, and on shore the transport is by road vehicles or other vehicles, and it is important that pollution of the environment is avoided. The transport is often over long distances, and it is important to ensure that the waste containers are securely closed.

There are a number of waste containers for this purpose in the market. They often have in common that they are time-consuming in handling and do not meet the requirements for safe handling. This is particularly the case in connection with filling and emptying, in which an operator must operate a big and often heavy and difficult-to-handle hatch, which closes the top of the waste container. This is carried out in all kinds of weather as the waste container is often handled outdoors, as for example on a drilling platform. Here, there is a great crushing hazard, and the operator must pay regard to a number of safety considerations in connection with operating the hatches.

Even though some of the existing waste containers are provided with more light-weight aluminium lids, these are often big and may involve risk.

From JP 9086591 A a container for transporting waste is known, in which a cover of cloth is secured at an open container top and is contractible and extendable by means of a bellows system, a fixed first wire being extended through openings arranged in the side portions of the cloth, along which the cloth may be moved. A second wire, which is connected to a cranking mechanism, is passed across sheaves and attached to an end portion of the cloth. By operating the crank, the cloth may be pulled over the open top of the container, closing it.

From US 2003/192900 A1 a container provided with a lid, which is displaceable along a sliding track between a closed position and a position outside the opening of the container is known. The lid may be clamped into sealing abutment against the container by means of clamping devices arranged on the walls of the container.

The invention has for its object to remedy or reduce at least one of the drawbacks of the prior art, or at least provide a useful alternative to the prior art.

The object is achieved in accordance with the invention through the features, which are specified in the claims that follow.

The invention provides a drilling-mud container with a sliding lid, which is easy and safe to open. The lid exhibits approximately the same measurements as known lids (physical outer measurements). It is important that a sliding lid has a certain opening when open to facilitate the emptying process.

The sliding lid according to the invention exhibits simpler functionality and thereby greater safety. The invention fulfils the strict safety requirements placed on waste containers of this kind.

The invention will create great flexibility with respect to servicing and handling waste containers. On a waste container there are often at least two lids, which should have the possibility of being opened. The invention has a first lid, which is provided with an opening mechanism, which may be positioned in the second one of the hatches. The opening mechanism and the first lid are not an obstacle to opening the second hatch.

Further, the sliding lid is designed to be manufactured with a relatively low consumption of material. The invention relates more specifically to a drilling-mud container including bulkheads of plates provided with vertical and horizontal profiles forming a frame, the drilling-mud container being provided with at least one sliding lid which is arranged to be displaced in a sliding track by means of at least one opening mechanism, the displacement being possible in both an open and closed position of a hinged service hatch arranged for filling and maintenance access to the container, characterized by a toothed wheel, which is rotatably arranged within the drilling-mud container and included in the opening mechanism, being in engagement with a pitch rack arranged in the sliding lid, and the pitch rack being provided with an end portion which is inclined in the direction of the toothed wheel, the abutment of the end portion against the toothed wheel causing the sliding lid to be displaced, during its displacement towards the closed position, in a vertical direction into sealing abutment against an abutment portion on the drilling-mud container; and the opening mechanism being operable from upper portion of the waste container remotely from the sliding lid at least when the hinged service hatch is in its closed position.

The opening mechanism may be formed of a winch system, which is connected by means of a drive chain to the toothed wheel, which is rotatably arranged in the drilling-mud container and is in engagement with the pitch rack arranged in the sliding lid.

By locking engagement, a locking and lifting mechanism connected to the sliding lid may be arranged to displace the sliding lid into sealing abutment against an upper portion of the adjacent bulkhead and/or a portion of the frame of the drilling-mud container.

The abutment portion may be a sliding rail surrounding a side edge of the sliding lid.

The winch system may be fixed within the drilling-mud container and is connectable to a shaft, which is supported in the service hatch and is provided with a handle.

In what follows, a non-limiting example of a preferred embodiment is described, which is visualized in the accompanying drawings, in which:
- Figure 1: shows front and side views of a non-dimensioned waste container in which a so-called service hatch is shown in an open position;
- Figure 2: shows front and side views of the waste container in which the so-called service hatch is in a closed position;
- Figure 3: shows a perspective view of the waste container, in which the so-called service hatch is shown in an open position and a sliding lid is partially open;
- Figure 4: shows, on a larger scale, details of the sliding lid; and
- Figure 5: shows, on a still larger scale, a detail in the sliding lid.

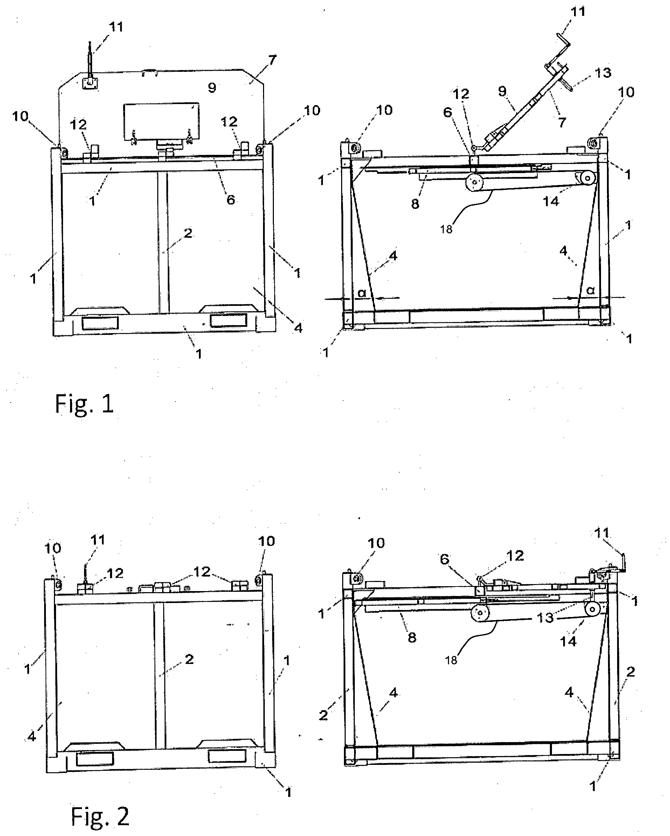

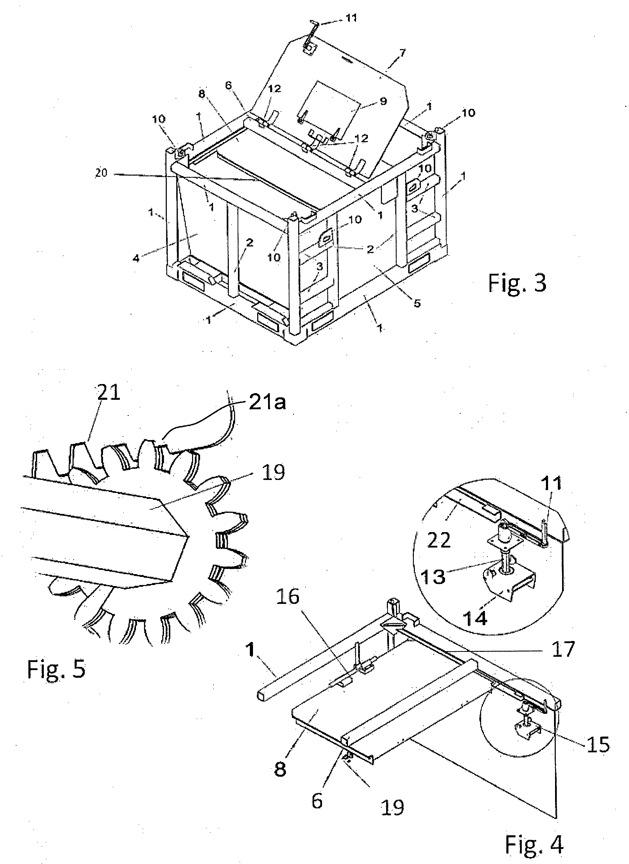

In the drawings, the reference numeral 1 indicates a waste container, which is provided with a frame 2, 3 and bulkheads 4, 5. The waste container 1 is provided with a hatch 7, also called a service hatch, provided with hinges 12 connected to a division profile 6. The service hatch 7, which is often opened in connection with maintenance, is shown here with a filling hatch 9. The filling hatch 9 may work as an opening in connection with pumping drilling mud into the waste container 1. Figure 1 shows the service hatch 7 in the open position and provided with a handle 11 which is connected to the shaft 13 supported in the service hatch 7, forming elements in an opening mechanism 15 (see figure 4 in particular). The service hatch (7) can be opened and closed without this affecting a winch system, which is arranged in the upper portion of the waste container 1.

The winch system 14 is connected by way of a drive chain 18 to two toothed wheels 19 supported in the frame 2. The toothed wheels 19 are in engagement with respective pitch racks 21 (see figure 5) arranged along the side edges of the sliding lid 8. In an end portion facing the toothed wheels 19, the pitch rack 21 is provided with a toothed bottom surface portion 21a which is inclined in the direction of the respective toothed wheel 19. When the lid 8 is displaced towards its closed position, the inclined portion 21a of the pitch rack 21 will contribute to the sliding hatch being lifted into sealing abutment against an abutment portion 22 inside a sliding rail arranged in the frame 2 (see figure 4 in particular).

Figure 2 shows the waste container 1 in a transport position with the service hatch 7 closed, and the sliding lid 8 closed. When the sliding lid 8 is in its closed position, a locking and lifting mechanism 16 may pull the sliding lid 8 in towards the bulkhead 4, where a gasket 20 arranged on an end portion of the lid 8 forms a seal between the sliding lid 8 and the bulkhead 4.

As the hatch 7 is pivoted into its closed position, the shaft 13 of the opening mechanism 15 will engage the winch system 14, making it possible to operate the sliding lid 8 and also open the hatch 7 again whenever necessary, independently of the position of the sliding lid 8, for inspection of the waste container 1. The opening mechanism 15 is mounted remotely from the sliding lid 8 as the lid 8 is operated manually when the waste container 1 is being emptied, by the sliding lid 8 being opened and the waste container 1 being turned until its contents slide out by means of gravity. It may also be an advantage to construct the opening mechanism 15 in such a way that a transmission between the winch system 14 and the toothed wheels 19 is provided, which makes it easier to open the sliding lid 8.

## Claims

1. A drilling-mud container (1) including bulkheads of plates (4, 5) provided with vertical and horizontal profiles (2, 3) forming a frame (2), the drilling-mud container (1) being provided with at least one sliding lid (8) which is arranged for emptying the container (1) and to be displaced in a sliding track (22) by means of at least one opening mechanism (15), the displacement being possible in both an open and closed position of a hinged service hatch (7) arranged for filling and maintenance access to the container (1), **characterized in that** a toothed wheel (19), which is rotatably arranged in the drilling-mud container (1) and included in the opening mechanism (15), is in engagement with a pitch rack (21) arranged in the sliding lid (8), and the pitch rack (21) is provided with an end portion (21a) which is inclined in the direction of the toothed wheel (19), the abutment of the end portion (21a) against the toothed wheel (19) causing the sliding lid (8), during its displacement towards the closed position, to be displaced in a vertical direction into sealing abutment against an abutment portion (22) on the drilling-mud container (1); and the opening mechanism (15) being manually operable from an upper portion of the waste container (1) remotely from the sliding lid (8) at least when the hinged service hatch (7) is in its closed position.

2. The drilling-mud container in accordance with claim 1, **characterized in that** the opening mechanism (15) is formed of a winch system (14) which is connected by means of a drive chain (18) to the toothed wheel (19) which is rotatably arranged in the drilling-mud container (1) and which is in engagement with the pitch rack (21) arranged in the sliding lid (8).

3. The drilling-mud container in accordance with claim 1, **characterized in that**, by locking engagement, a locking and lifting mechanism (16) connected to the sliding lid (8) is arranged to displace the sliding lid (8) into sealing abutment against an upper portion of the adjacent bulkhead (4) and/or a portion of the frame (2) of the drilling-mud container (1).

4. The drilling-mud container in accordance with claim 1, **characterized in that** the abutment portion (22) is a sliding rail, which surrounds a side edge of the sliding lid (8).

5. The drilling-mud container in accordance with claim 2, **characterized in that** the winch system (14) is fixed inside the drilling-mud container (1) and is connectable to a shaft (13) which is supported in the service hatch (7) and is provided with a handle (11).

## Patentansprüche

1. Ein Bohrschlammbehälter (1) aufweisend Schottplatten (4, 5), versehen mit vertikalen und horizontalen Profilen (2, 3), die einen Rahmen (2) bilden, wobei der Bohrschlammbehälter (1) mit mindestens einem Schiebedeckel (8) versehen ist, welcher zum Leeren des Behälters (1) und zum Verschieben in einer Schiebebahn (22) mittels mindestens einem Öffnungsmechanismus (15) angeordnet ist, wobei die Verschiebung sowohl in die Offen- als auch in die Schliessstellung einer angelenkten Bedienungsklappe (7) möglich ist, welche zum Befüllen und zum Unterhaltszugang zum Behälter (1) angeordnet ist, **dadurch gekennzeichnet, dass** ein gezahntes Rad (19), welches drehbar in dem Bohrschlammbehälter (1) angeordnet und in der Öffnungseinrichtung (15) enthalten ist, in Eingriff mit einer Zahnstange (21) ist, welcher im Schiebedeckel (8) angeordnet ist, und die Zahnstange (21) mit einem Endabschnitt (21a) versehen ist, welcher in Richtung des gezahnten Rades (19) geneigt ist, wobei das Anliegen des Endabschnitts (21a) am gezahnten Rad (19) bewirkt, dass der Schiebedeckel (8) während dessen Verschiebung in Richtung der Schliessstellung in vertikaler Richtung in abdichtende Anlage gegen einen Anlageabschnitt (22) auf dem Bohrschlammbehälter (1) verschoben wird; und wobei der Öffnungsmechanismus (15), zumindest wenn die angelenkte Bedienungsklappe (7) in ihrer Schliessstellung ist, manuell von einem vom Schiebedeckel (8) entfernt liegenden oberen Abschnitt des Abfallbehälters (1) bedienbar ist.

2. Der Bohrschlammbehälter nach Anspruch 1,**dadurch gekennzeichnet, dass** der Öffnungsmechanismus (15) aus einer Windensystem (14) gebildet ist, welches mittels einer Antriebskette (18) mit dem gezahnten Rad (19), welches drehbar in der im Bohrschlammbehälter (1) angeordnet ist, verbunden ist und welches in Eingriff mit der im Schiebedeckel (8) angeordneten Zahnstange (21) steht.

3. Der Bohrschlammbehälter nach Anspruch 1,**dadurch gekennzeichnet, dass** ein Verriegelungs- und Hebemechanismus (16), der mit dem Schiebedeckel (8) verbunden ist, durch Rasteingriff eingerichtet ist, um den Schiebedeckel (8) in abdichtende Anlage an einen oberen Abschnitt der benachbarten Schottwand (4) und/oder eines Abschnitts des Rahmen (2) des Bohrschlammbehälter (1) zu verschieben.

4. Der Bohrschlammbehälter nach Anspruch 1,**dadurch gekennzeichnet, dass** der Anlageabschnitt (22) eine Gleitschiene ist, die eine Seitenkante des Schiebedeckels (8) umgibt.

5. Der Bohrschlammbehälter nach Anspruch 2, **dadurch gekennzeichnet, dass** das Windensystem (14) innerhalb des Bohrschlammbehälters (1) befestigt und mit einer Welle (13) verbindbar ist, welche in der Unterhaltsklappe (7) gelagert ist und einen Griff (11) aufweist.

## Revendications

1. Un contenant à boue de forage (1) comprenant des cloisons constituées de plaques (4, 5) dotées d'éléments profilés verticaux et horizontaux (2, 3) formant une structure (2), le contenant à boue de forage (1) étant muni d'au moins un couvercle coulissant (8) étant disposé pour vider le contenant (1) et conçu pour pouvoir être déplacé dans une glissière (22) au moyen d'au moins un mécanisme d'ouverture (15), le déplacement étant possible dans une position ouverte et fermée d'un panneau de service articulé (7) disposé pour un accès **de remplissage et d'entretien** au contenant (1), **caractérisé en ce que** un pignon (19) qui est disposé de manière rotative dans le contenant à boue de forage (1) et est inclus **dans le mécanisme d'ouverture (15),** coopère avec une crémaillère (21) disposée dans le couvercle coulissant (8) et la crémaillère (21) est dotée d'une partie d'extrémité (21a) qui est inclinée en direction du pignon (19), la butée de la partie d'extrémité (21a) contre le pignon (19) causant le couvercle coulissant (8), lors de son déplacement vers la position fermée, à être déplacé en une direction verticale de façon à former un joint étanche contre une partie de butée (22) sur le contenant à boue de forage (1) ; et le mécanisme **d'ouverture (15) étant opérable de manière manuelle depuis une partie supérieure** du contenant a déchets (1) à distance du couvercle articulé (8) au moins lorsque le panneau de service articulé (7) est dans sa position fermée.

2. Le contenant à boue de forage (1) selon la revendication 1, **caractérisé en ce que** le **mécanisme d'ouverture (15) est formé d'un système de treuillage (14) qui est connecté au moyen d'une chaîne de transmission (18) au pignon** (19) qui est disposé de manière rotative dans le contenant à boue de forage (1) et qui coopère avec la crémaillère (21) disposée dans le couvercle coulissant (8).

3. Le contenant à boue de forage (1) selon la revendication 1, **caractérisé en ce que**, par coopération d'encliquetage, un mécanisme de verrouillage et de soulèvement (16) connecté au couvercle coulissant (8) est disposé pour déplacer le couvercle coulissant (8) vers un joint étanche contre une partie supérieure de la cloison adjacente (4) et/ou une partie de la structure (2) du contenant à boue de forage (1).

4. Le contenant à boue de forage (1) selon la revendication 1, **caractérisé en ce que** la partie de butée (22) est une glissière, qui entoure un bord latéral du couvercle coulissant (8).

5. Le contenant à boue de forage (1) selon la revendication 2, **caractérisé en ce que** le système de treuillage (14) **est fixé à l'intérieur du contenant** à boue de forage (1) et peut être connecté à un arbre (13) qui est supporté dans le panneau de service (7) et est pourvu **d'un manche (11).**
